# EUROPEAN PATENT APPLICATION

(11) **EP 3 251 798 A1**
(43) Date of publication of application: **06.12.2017**
(21) Application number: 16171953.9
(22) Date of filing: 30.05.2016
(51) Int. Cl.: B25B 13/06, B25B 23/04, B25B 23/06, B25B 23/10, B25B 23/14, F16B 31/02, B23P 19/00, B23P 19/06

(54) **POWERED NUT RUNNER**

(71) Applicant: Airbus Operations GmbH, 21129 Hamburg (DE)
(72) Inventor: Köster, Stefan, 21129 Hamburg (DE); Skirke, Jörn, 21129 Hamburg (DE)
(74) Representative: Schicker, Silvia

(57) **Abstract**

A powered nut runner (100) is described, comprising a socket (110) which is rotatably arranged in the powered nut runner and which is configured to accommodate a nut (N), a motor (120) configured to exert a torque on the socket for powered fastening of a nut accommodated in the socket to a bolt (B), nut reservoir connecting means (130) for connecting the powered nut runner to a nut reservoir (304), and a feed channel (140) extending from the socket. The powered nut runner is configured to enable a nut stored in the nut reservoir to become automatically transported from the nut reservoir into the socket via the feed channel, when the powered nut runner is connected to the nut reservoir. Further described is a nut reservoir and a powered nut runner system.

## Description

The present disclosure generally relates to powered nut runners. It relates in particular to a powered nut runner which is connectable to a nut reservoir. It further relates to a nut reservoir and a powered nut runner system.

Industrial assembly processes, for example in the manufacture of aircraft or cars, often involve large numbers of bolted connections. For making a bolted connection a sequence of coordinated steps is required. In a prior step, a bolt is provided at the connection site, for example, by placing the bolt through a bore in a component for assembly. Subsequently, a nut or collar is to be fastened to the bolt to thereby form the connection. Fastening the nut, in turn, normally involves providing the nut to the connection site, placing the nut on the bolt or in the socket of a nut runner, positioning the nut runner on the bolt, and operating the nut runner to fasten the nut. Meanwhile, especially in industrial manufacturing, in a prior stage a plurality of bolts is often provided to a plurality of connection points, whereas in a subsequent stage a nut or collar is to be fastened to each of the provided bolts.

As an alternative to conventional nuts, frangible collars can be used, which consist of two parts connected by a breaking point. Once a predefined torque is applied to the head of the collar, the head breaks off and leaves the remaining collar fastened with the predefined torque. However, if frangible collars are used, the fastening process further includes removing the broken-off head from the socket of the nut runner, and disposing of it.

Typically, placing a nut on a bolt or in the socket of a nut runner and positioning the nut runner on the bolt necessitates a two-handed process and thereby charges an assembly operator's full capacity. Moreover, if the bolt can rotate inside the bore, the operator usually needs to manually prevent the bolt from rotating during the fastening process. This requires a change of tools between the steps of placing the nut and fixating the bolt against rotation. Moreover, especially in the manufacture of an aircraft or a car a free access to the bolts is often hindered by the shape of the assembled components. Although extended nut runner heads are known for accessing partly concealed bolts, placing the nut on the bolt or in the socket of the nut runner is particularly cumbersome under such conditions. Meanwhile, in the manufacture of a vehicle, such as an aircraft or a car, multiple connections are typically formed of identical pairs of bolt and nut. While this facilitates the logistics in the manufacture and maintenance of the vehicle, a potential for rationalizing the manufacturing process itself is still not fully exploited.

A technique that avoids these drawbacks is therefore desirable.

It is an object of the present invention to avoid or at least mitigate the aforementioned drawbacks.

According to a first aspect, a powered nut runner is provided. The powered nut runner comprises a socket which is rotatably arranged in the powered nut runner and which is configured to accommodate a nut, a motor configured to exert a torque on the socket for powered fastening of a nut accommodated in the socket to a bolt, nut reservoir connecting means for connecting the powered nut runner to a nut reservoir, and a feed channel extending from the socket. The powered nut runner is configured to enable a nut stored in the nut reservoir to become automatically transported from the nut reservoir into the socket via the feed channel, when the powered nut runner is connected to the nut reservoir.

The nut may comprise a plane nut and/or a frangible collar. The frangible collar may include a collar and a head which are connected by a breaking region.

The powered nut runner may further comprise a holding pin. The holding pin may be configured to engage with a counterpart recess of the bolt. The holding pin may be configured to block the bolt against rotating with the socket when the holding pin engages with the counterpart recess of the bolt.

The powered nut runner may further comprise releasable blocking means. A position of the releasable blocking means may be changeable between a blocking position in which a nut is blocked, by the blocking means, from being transported from the nut reservoir into the socket, and a released position in which a nut is permitted, by the blocking means, to be transported from the nut reservoir into the socket. The releasable blocking means may be in the blocking position when the socket is accommodating a nut. The releasable blocking means may be in the released position when the socket is not accommodating a nut. The blocking means may automatically change from the blocking position to the released position upon removal of a nut from the socket.

The powered nut runner may further comprise releasable holding means configured to releasably hold a nut accommodated in the socket. The releasable holding means may comprise a ball lock. In addition or as an alternative, the releasable blocking means may comprise the releasable holding means. A nut held in the socket by the holding means may block another nut from being transported from the nut reservoir into the socket.

The powered nut runner may further comprise collar head removing means configured to remove a broken-off head of a frangible collar from the socket. Alternatively, the releasable holding means may be configured to releasably hold an integral frangible collar in the socket and not to hold a broken-off head of a frangible collar.

The powered nut runner may further comprise a movable bush which is configured to move in accordance with a fastening depth of the nut. The movable bush may be configured to release the releasable holding means and/or the releasable blocking means at a predetermined fastening depth of the nut.

The powered nut runner may further comprise transporting means for automatically transporting the nut via the feed channel into the socket. The transporting means may comprise electric and/or pneumatic transporting means. The transporting means may further comprise guiding means for guiding the nut during transport. The transporting means may be driven by the motor of the powered nut runner.

The nut may be transported into the socket, via the feed channel and through a proximal end of the socket, in a feed direction which is at least essentially parallel to a rotation axis of the socket. In that case, the socket may have a tubular shape with open distal and proximal ends. The nut may be oriented and transported such that a rotation axis of the nut coincides with the rotation axis of the socket, while the nut is transported into the socket.

Alternatively, the nut may be transported into the socket via the feed channel in a feed direction which is transverse to a rotation axis of the socket. In that case, the nut may be oriented and transported such that a rotation axis of the nut is shifted parallel to the rotation axis of the socket, while the nut is transported into the socket. The blocking means may comprise at least a portion of an outer surface of the socket. The socket may be at least partly moved out of the feed direction relative to the feed channel when the blocking means are in the released position. For example, the socket may be movable to become shifted or swivelled out of the feed direction. The

socket may also comprise a flap which is movable to swing out of the feed direction. In the case of a transverse feed direction, the holding pin may be arranged in the powered nut runner near the rotation axis of the socket.

According to a second aspect, a nut reservoir for use with a powered nut runner as presently described is provided. The nut reservoir may comprise a storage portion for storing at least one nut, and nut runner connecting means for connecting the nut reservoir to the powered nut runner.

The nut reservoir may further comprise transporting means for automatically transporting the nut from the storage portion of the nut reservoir towards the feed channel of the powered nut runner, when the nut reservoir is connected to the powered nut runner. The transporting means may comprise at least one spring. In addition or as an alternative, the transporting means may comprise electrically and/or pneumatically powered transporting means. The transporting means may comprise a belt to which the at least one nut is removably attached.

The nut reservoir may further comprise guiding means for guiding the nut during transport. The guiding means may comprise a guiding channel, a guiding tube and/or a belt.

According to a third aspect, a powered nut runner system is provided. The powered nut runner system comprises a powered nut runner as presently described and a nut reservoir as presently described. The nut reservoir connecting means of the powered nut runner and the nut runner connecting means of the nut reservoir may be configured to engage one another.

The powered nut runner and the transporting means of the nut reservoir may be powered by a same power source. The power source may comprise an electric power source and/or a pressurized air reservoir. The powered nut runner may be powered via the nut reservoir. The transporting means of the nut reservoir may be driven by the motor of the powered nut runner.

Further details, objects and advantages of the invention will get apparent from the drawings and the detailed description. There is shown in:
- Fig. 1: a schematic illustration of a powered nut runner according to a first embodiment;
- Figs. 2a and 2b: schematic illustrations of different positions of a powered nut runner according to another embodiment;
- Fig. 3: a schematic illustration of a powered nut runner system according to an embodiment;
- Fig. 4: a schematic illustration of a powered nut runner according to another embodiment;
- Figs. 5a and 5b: schematic illustrations of different positions of a powered nut runner according to another embodiment, and
- Fig. 6: a schematic illustration of a powered nut runner system according to another embodiment.

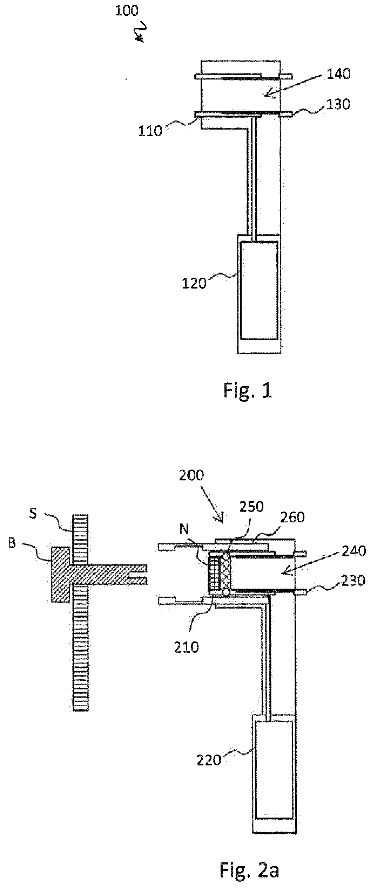

Fig. 1 shows a schematic illustration of a powered nut runner 100 configured for powered fastening of nuts or frangible collars, according to a first embodiment. The nut runner 100 comprises a socket 110 for accommodating a nut or a collar intended for fastening. The socket 110 is arranged in the powered nut runner 100 rotatable about its longitudinal axis. Moreover, the socket 110 has a tubular shape with open ends at its distal and its proximal sides. The nut runner 100 further comprises a motor 120 for driving the socket 110. In addition, the nut runner 100 comprises nut reservoir connecting means 130 for connecting a nut reservoir to the nut runner 100. There is further arranged a feed channel 140 extending from the socket 110 towards the nut reservoir connecting means 130.

The powered nut runner 100 allows for powered fastening of a nut that is accommodated in the socket 110 to a threaded bolt. For that purpose, the motor 120 is configured to exert a torque on the rotatable socket 110. For example, the motor 120 is implemented as an electric motor or a pneumatically driven motor. In addition, by means of the nut reservoir connecting means 130 and the feed channel 140, the powered nut runner 100 allows for re-loading the socket 110 with a spare nut via the feed channel and through the open proximal end of the socket 110. At the same time, the nut reservoir connecting means 130 allow for a nut reservoir to become connected to the nut runner 100 for automatically feeding a nut from the nut reservoir to the powered nut runner 100.

To facilitate the automatic transport of a nut via the feed channel into the socket, in some examples, the nut runner 100 comprises transporting means for transporting a nut provided at the nut reservoir connecting means through the feed channel 140 into the socket 110. For example, such transporting means comprise a transport roller, a transport belt or a screw conveyer. In some examples, the transporting means of the powered nut runner 100 are also driven by the motor 120. In other examples, transporting means are provided in the nut reservoir. For example, a preloaded spring is arranged in the nut reservoir that pushes the nut out of the reservoir and towards the socket 110 via the feed channel 140, when the nut runner 100 is connected to the nut reservoir.

Figure 2a shows a schematic illustration of a powered nut runner 200 according to another embodiment in a first position. Analogous to the powered nut runner 100 of Figure 1, the powered nut runner 200 of Figure 2a comprises a socket 210, a motor 220, nut reservoir connecting means 230 and a feed channel 240. With regard to these elements, the details set forth above in connection with the nut runner 100 of Figure 1 apply accordingly. Different from the embodiment of Figure 1, however, the nut runner 200 of Figure 2a further comprises releasable blocking means 250 for blocking a nut from entering the socket 210 and a movable bush 260 which is movable relative to the socket 210 and parallel to a fastening direction of the nut runner 200. A position of the movable bush is biased in the fastening direction, for example, by means of a spring.

In Figure 2a, a nut N in the form of a frangible collar is shown accommodated in the socket 210 and held in place by the blocking means 250. In the shown example, the releasable blocking means 250 thereby also function as releasable holding means for holding the collar N accommodated in the socket 210. Furthermore, in the shown example, the blocking means 250 are implemented as a ball lock that engages with the head portion of the frangible collar N. In other examples, however, other blocking means and/or holding means are provided to prevent a spare nut from being transported into the socket 210 while a nut N is accommodated in the socket 210 and/or to prevent a nut N accommodated in the socket from accidentally falling out of the socket 210.

In the shown example, the ball lock 250 is configured to interact with the movable bush 260. Moreover, the movable bush 260 is movable to change its position relative to the socket 210 and to the ball lock 250 depending on a distance between the socket 210 and a structure S having a bolt B to which the nut N is to be fastened. In the shown arrangement, the blocking and holding means 250 become released when the position of the movable bush 260 indicates that the nut N has become fastened to an intended fastening depth. The the nut or the broken-off head of the collar thus becomes released from the socket 210 and a spare nut or collar is allowed to become transported into the socket 210. As an example, once a spare nut has been transported into the socket 210, the releasable blocking means 250 are configured to automatically return to their blocking position, thus preparing the powered nut runner 200 for another application.

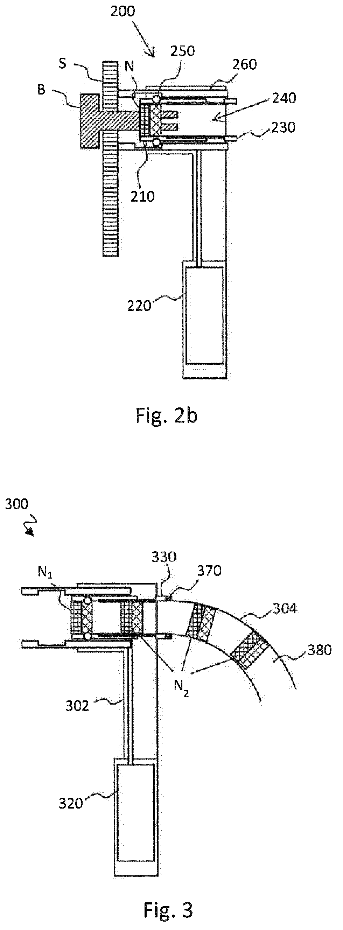

Figure 2b shows a schematic illustration of the powered nut runner 200 of Figure 2a in a second position relative to the structure S and the bolt B. In particular, Figure 2b shows a position of the nut runner 200 during a fastening process at a stage in which the nut N has been fastened to the bolt B down to a certain fastening depth. In accordance with that fastening depth, the movable bush 260 has been pushed back against the biasing force and thereby changed its position relative to the socket 210.

As shown in Figure 2b, the movable bush 260 has been pushed back by a distance such that a position of the releasable blocking means 250 corresponds to a recessed portion in the movable bush 260. This allows the balls of the ball lock 250 to move outwardly into the recessed portions of the movable bush 260 and thereby release the nut N from the socket 210. In alternative examples, the blocking means 250 are configured to hold an integral frangible collar in the socket 210 while not being configured to hold only a broken-off head of a frangible collar.

The releasable blocking means 250 allow for the powered nut runner 200 to become removed once the connection has been fastened to a fastening depth as predefined by the position of the recessed portion in the movable bush 260. At the same time, once released, the releasable blocking means 250 and/or the movable bush 260 are in some examples configured to remain in the released position until a spare nut has become loaded into the socket 210 via the feature channel 240. Moreover, in some examples, once a spare nut has been accommodated in the socket 210, the releasable holding means 250 are configured to return to their blocking position.

Figure 3 shows a schematic illustration of a powered nut runner system 300 according to another embodiment. The powered nut runner system 300 comprises a powered nut runner 302 and a nut reservoir 304 connected to the nut runner 302. The nut runner 302 corresponds to any of the above described examples. In particular, the nut runner 302 also comprises a motor 320 and nut reservoir connecting means 330 and is configured to accommodate a nut N₁ in a rotatable socket of the nut runner 302. The nut reservoir 304 comprises nut runner connecting means 370 for connecting the nut reservoir 304 to the nut runner 302, and a storage portion 380 for storing one or more spare nuts N₂ to become fed into the socket of the nut runner 302. The nut reservoir connecting means 330 of the nut runner 302 and the nut runner connecting means 370 of the nut reservoir 304 are configured to engage with one another. In that way a nut is enabled to become fed from the storage portion 380 of the nut reservoir 304 via a feed channel of the nut runner 302 towards the socket of the nut runner 302.

In the example of Figure 3, the nut reservoir 304 has a tubular shape which forms a channel to guide the spare nuts N₂ inside the storage portion 380 towards the feed channel of the nut runner 302. In some examples, the nut reservoir 304 further comprises transporting means for transporting the spare nuts N₂ towards the nut runner 302. In the shown example, these transporting means comprise pressurized air injected into the nut reservoir 304 at an opposite end (not shown) of the nut reservoir 304. The pressurized air serves to push the spare nuts N₂ towards the feed channel of the nut runner 302 when connected to the nut reservoir. In some examples of the system 300, the pressurized air provided to the nut reservoir 304 is further used to power the motor 320 of the nut runner 302.

While the air pressure in the nut reservoir 304 pushes the spare nuts N₂ towards the socket of the nut runner 302, the blocking means of the nut runner 302 prevent the nuts from getting pushed out of the socket by the air pressure. For example, a nut N₁ which is held accommodated in the socket by the blocking means blocks at the same time the following nuts N₂ from being transported into the socket. However, once the blocking means change into their released position, as described in connection with Figures 2a and 2b, the blocking means allow for a next nut N₂ to become pushed into the socket by means of the air pressure inside the nut reservoir 304.

In the shown example, pressurized air is used to power the nut runner 302 and also the nut reservoir 304. In other examples, other power sources are used, for example, electric power sources, for driving the motor 320 and/or transporting means in the nut reservoir 304. The pressurized air is at the same used for blowing a broken-off head of a frangible collar out of the socket. In further examples, the nut reservoir 304 comprises a spring which has been loaded prior to operation, for example, when the spare nuts N₂ have been placed into the storage portion 380 of the nut reservoir 304. In other examples, gravitational force is used to transport the spare nuts N₂ from the storage portion 380 of the nut reservoir 304 towards the nut runner 302.

The nut runner system 300 allows for convenient one-handed operation for fastening a nut to a bolt. Moreover, conventionally manual steps of placing a nut to the bolt or socket are automatized by the nut runner system 300. The nut reservoir 304 further allows for automatic provision of an arbitrary amount of nuts for repeated use of the nut runner 302 without necessitating further provisions to be taken by the operator. Especially in connection with industrial assembly sites, the system 300 also allows for a single supply line for both spare nuts and power, for example, via the nut reservoir 304, for operating the nut runner system 300. Furthermore, in some examples, the nut reservoir 304 is configured to become connected to nut runners 302 of different shapes and/or with different extension heads for use with partly concealed bolts. This is facilitated in some examples by locking means at the connection end of the nut reservoir 304. Such locking means are configured to seal the nut reservoir 304 against an outlet of pressurized air and/or stored nuts when the nut reservoir 304 is not connected to a nut runner 302.

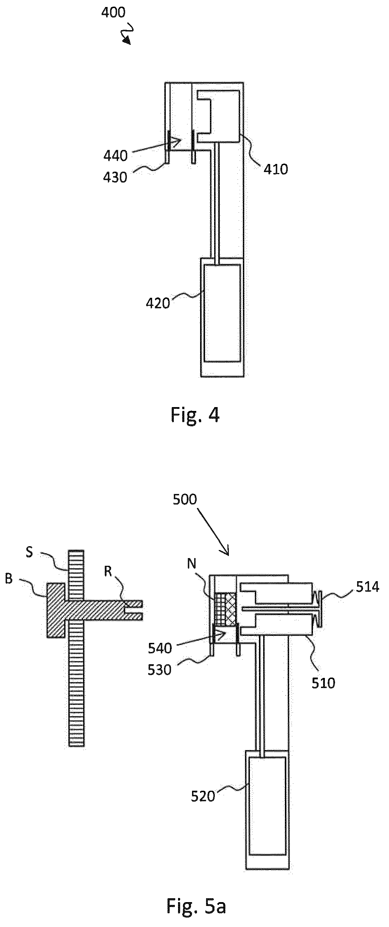

Figure 4 shows a schematic illustration of a powered nut runner 400 according to another embodiment. Similar to the nut runners 100, 200 according to Figures 1, 2a and 2b, the powered nut runner 400 comprises a socket 410, a motor 420, nut reservoir connecting means 430 and a feed channel 440. Moreover, aside from the differences discussed below, details set forth in connection with Figures 1 to 3 apply correspondingly also to the nut runner 400 of Figure 4.

Different from the previous embodiments, in the nut runner 400 the feed direction as defined by the feed channel 440 is arranged transverse to a rotation axis of the socket 410. By consequence, different from the previous examples, the socket 410 also does not need to be permeable for a nut to become transported into the socket 410. Instead, as shown in Figure 4, the socket 410 can be moved out of a feed direction relative to the feed channel 440 to allow for a nut to become placed in the socket. In particular, in the shown example, the socket 410 is movable along its rotation axis to thereby give way for a nut in the feed channel 440. Subsequently, the socket 410 can be moved back into its operation position, while at the same time accommodating the nut in the socket 410.

In other examples, the socket 410 is movably arranged in the nut runner 400 such that the socket 410 can become swiveled relative to the feed direction. In a swiveled position, the socket 410 is inclined such that it can receive a nut which is transported in the feed direction. After receiving the nut, the socket 410 swivels back into its operation position. In further examples, when the socket 410 is in its operation position, an outer surface of the socket 410 prevents a spare nut to become transported into the socket 410. In that case, the outer surface of the socket 410 functions as releasable blocking means analogous to the releasable blocking means described in connection with Figures 1 to 3. Moreover, in some examples, a side portion of the socket 410 can be moved out of the feed direction by way of a movable flap to give way to a nut for becoming transported into the socket 410.

Figure 5a a shows a schematic illustration of a powered nut runner 500 according to another embodiment in a first position. Analogous to the nut runner 400 of Figure 4, the nut runner 500 of Figure 5a comprises a socket 510, a motor 520, nut reservoir connecting means 530 and a feed channel 540. Different from the embodiment shown in Figure 4, however, the powered nut runner 500 further comprises a holding pin 514 that is movably arranged in the socket 510. The holding pin 514 is configured to engage with a counterpart recess R in the bolt B, as provided in a structure S. The holding pin 514 and the counterpart recess R prevent the bolt B from rotating with the socket 510 when a nut N is being fastened to the bolt B.

The holding pin 514 allows for single-handed fastening of the nut N to the bolt B without a need for manually fixating the bolt B against rotation in the structure S. However, whereas the holding pin 514 is arranged near a longitudinal axis of the socket of the nut runner 500, the nut N needs to bypass the holding pin 514 when being fed into the socket. This makes the provision of a holding pin difficult in the case of the coaxial feed direction of the embodiments shown in Figures 1 to 3. By contrast, the transverse feed direction of the nut runner 500 in combination with a movable socket, as described in connection with Figure 4, facilitates the provision of the holding pin 514 in the nut runner 500.

Figure 5a shows the powered nut runner 500 in a position prior to fastening the nut N to the bolt B. Furthermore, whereas the nut N has already been fed into the nut runner 500 to become accommodated by the socket 510, the socket 510 is still in a moved-back position. In some examples of the nut runner 500, the socket 510 is configured to automatically return to its operation position as soon as a nut N has been fed into position for getting accommodated by the socket 510. In that manner, another spare nut is simultaneously prevented from becoming fed into the nut runner 500.

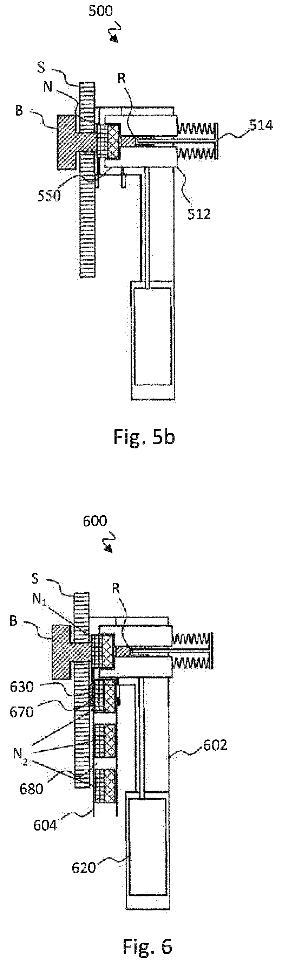

Figure 5b shows the nut runner 500 of Figure 5a in a second position during the fastening process. In particular, the position shown in Figure 5b corresponds to a situation in which the nut N has become fully fastened to the bolt B. As shown in Figure 5b, the holding pin 514 engages with the counterpart recess R of the bolt B, thus preventing the bolt B from rotating with the socket 512. At the same time, the movable arrangement of the holding pin 514 relative to the socket 512 allows the pin 514 to keep a constant position relative to the bolt B while the nut N becomes fastened to the bolt B and a fastening depth of the nut runner 500 relative to the structure S changes.

Figure 6 shows a schematic illustration of a powered nut runner system 600 according to another embodiment. The powered nut runner system 600 comprises a powered nut runner 602 according to one of the examples described in connection with Figures 4, 5a and 5b. In particular, the nut runner 602 comprises a motor 620 and nut reservoir connecting means 630 for connecting the nut runner 602 to a nut reservoir 604. The powered nut runner system 600 further comprises a nut reservoir 604 which includes nut runner connecting means 670 for connecting the nut reservoir 604 to the nut runner 602, and a storage portion 680 for storing one or more spare nuts N₂.

Except for the above described differences in the feeding systems, the functionality of the powered nut runner system 600 resembles that of the powered nut runner system 300 of Figure 3. In particular, in some examples of the powered nut runner system 600, pressurized air is injected into the nut reservoir 604 to transport the spare nuts N₂ towards the socket of the nut runner 602 and to drive the motor 620 of the nut runner 602. Other examples of the system 600 use electric power to drive the motor 620 and to drive transporting means of the nut runner 602 for transporting the spare nuts N₂ towards the socket of the nut runner 602. In that case, in some examples, the nut reservoir 604 comprises a belt to which the spare nuts N₂ have been removably attached, whereas the transporting means of the nut runner 602 comprise a transport roller, a transport wheel or other transport means driven by the motor 620 to transport the belt towards the nut runner 602.

## Claims

1. Powered nut runner (100; 200; 302; 400; 500; 602), comprising:
a socket (110; 210; 410; 510) which is rotatably arranged in the powered nut runner and which is configured to accommodate a nut (N; N₁);
a motor (120; 220; 320; 420; 520; 620) configured to exert a torque on the socket (110; 210; 410; 510) for powered fastening of a nut (N; N₁) accommodated in the socket to a bolt (B);
nut reservoir connecting means (130; 230; 330; 430; 530; 630) for connecting the powered nut runner to a nut reservoir (304; 604); and
a feed channel (140; 240; 440; 540) extending from the socket,
wherein the powered nut runner is configured to enable a nut (N₂) stored in the nut reservoir (304; 604) to become automatically transported from the nut reservoir into the socket (110; 210; 410; 510) via the feed channel (140; 240; 440; 540), when the powered nut runner is connected to the nut reservoir.

2. Powered nut runner (100; 200; 302; 400; 500; 602) according to claim 1, further comprising:
releasable blocking means (250, 260; 550), wherein a position of the releasable blocking means is changeable between a blocking position in which a nut (N₂) is blocked, by the blocking means, from being transported from the nut reservoir (304; 604) into the socket (110; 210; 410; 510), and a released position in which a nut (N₂) is permitted, by the blocking means, to be transported from the nut reservoir (304; 604) into the socket (110; 210; 410; 510).

3. Powered nut runner (100; 200; 302; 400; 500; 602) according to claim 2, wherein the releasable blocking means are in the blocking position when the socket is accommodating a nut (N₁), and wherein the releasable blocking means are in the released position when the socket is not accommodating a nut.

4. Powered nut runner (100; 200; 302; 400; 500; 602) according to any of the preceding claims, further comprising releasable holding means (250, 260) configured to releasably hold a nut (N₁) accommodated in the socket.

5. Powered nut runner (100; 200; 302; 400; 500; 602) according to claim 4, wherein the releasable holding means (250, 260) comprise a ball lock.

6. Powered nut runner according to claim 4 or 5 in combination with claim 2, wherein the releasable blocking means (250) comprise the releasable holding means (250, 260).

7. Powered nut runner (100; 200; 302; 400; 500; 602) according to any of the preceding claims, further comprising transporting means for automatically transporting the nut via the feed channel into the socket.

8. Powered nut runner (100; 200; 302) according to any of the preceding claims, wherein the nut (N₂) is transported into the socket, via the feed channel (140; 240) and through a proximal end of the socket (110; 210), in a feed direction which is at least essentially parallel to a rotation axis of the socket.

9. Powered nut runner (400; 500; 602) according to any of the claims 1 to 7, wherein the nut (N₂) is transported into the socket (410; 510) via the feed channel (440; 540) in a feed direction which is transverse to a rotation axis of the socket.

10. Powered nut runner (400; 500; 602) according to claim 9, further comprising a holding pin (514) configured to engage with a counterpart recess (R) of the bolt (B).

11. Nut reservoir (304; 604), for use with a powered nut runner according to any of claims 1 to 10, comprising:
a storage portion (380; 680) for storing at least one nut (N₂), and
nut runner connecting means (370; 670) for connecting the nut reservoir to the powered nut runner.

12. Nut reservoir (304; 604) according to claim 11, further comprising transporting means for automatically transporting the nut (N₂) from the storage portion (380; 680) of the nut reservoir towards the feed channel of the powered nut runner, when the nut reservoir is connected to the powered nut runner.

13. Powered nut runner system (300; 600), comprising a powered nut runner (302; 602) according to any of claims 1 to 10 and a nut reservoir (304; 604) according to claim 11 or 12.

14. Powered nut runner system (300; 600) according to claim 13, comprising a nut reservoir (304; 604) according to claim 12, wherein the powered nut runner (302; 602) and the transporting means of the nut reservoir (304; 604) are powered by a same power source.

15. Powered nut runner system (300; 600) according to claim 14, wherein the power source comprises an electric power source and/or a pressurized air reservoir.
